Europäisches Patentamt

European Patent Office

Office européen des brevets

(11) Veröffentlichungsnummer: **0 110 085**
A2

(12) **EUROPÄISCHE PATENTANMELDUNG**

(21) Anmeldenummer: 83110313.0

(51) Int. Cl.³: **G 07 F 7/02**

(22) Anmeldetag: 15.10.83

(30) Priorität: 27.10.82 DE 3239681

(43) Veröffentlichungstag der Anmeldung: 13.06.84
Patentblatt 84/24

(84) Benannte Vertragsstaaten: **BE DE FR GB NL**

(71) Anmelder: **MAATSCHAPPIJ VAN BERKEL'S PATENT N.V., P.O. Box 6018 Keileweg 5, NL-3029 BR Rotterdam (NL)**

(72) Erfinder: **Robberecht, Otto, Ir., D'Van de Perrelei 111, B-2200 Antwerpen (BE)**

(74) Vertreter: **Mentzel, Norbert, Dipl.-Phys. et al, Patentanwälte Dipl.-Phys. Buse Dipl.-Phys. Mentzel Dipl.-Ing. Ludewig Unterdörnen 114, D-5600 Wuppertal 2 (DE)**

(54) **Verkaufsanlage für Waren.**

(57) Bei einer Verkaufsanlage für Waren, vorzugsweise für Waren der Lebensmittelbranche, liegt hinter einem kontrollierbaren Kunden-Eingang wenigstens eine Bedienungsstelle für Waren eines bestimmten Sortiments vorgesehen mit Preisangabegeräten. Vor dem Kunden-Ausgang sind Zahlstellen vorgesehen mit Kassen und gegebenenfalls mit Quittungs-Druckern. Für eine irrtumsfreie, gut kontrollierbare Arbeitsweise wird vorgeschlagen, Kenngrößen enthaltende Identifikationskarten dem Kunden vor dem Eingang auszugeben, die ein maschinenlesbares Feld mit der Kenngröße enthalten. Am Eingang sind Lesestellen eines Registriergerätes vorgesehen, wo diese Kenngrößen erfaßt und einem Zentralcomputer zugeführt werden und als Adressen für alle weiteren Einkaufshandlungen dienen. An den verschiedenen Bedienungsstellen befinden sich ebenfalls Lesestellen für Identitätskarten. Am Ausgang der Anlage sind Löschungsgeräte mit weiteren Lesestellen für die Identitätskarte vorgesehen, welche für die abgelesene Kenngröße sowohl alle Geräte der Bedienungs- und gegebenenfalls Zahlstellen als auch den Zentralcomputer für die Aufnahme weiterer Daten dieser Identitätskarten sperrt.

0110085

PATENTANWÄLTE

DIPL.-PHYS. BUSE · DIPL.-PHYS. MENTZEL · DIPL.-ING. LUDEWIG
Unterdörnen 114 · Postfach 200210 · 5600 Wuppertal 2 · Fernruf (0202) 55 70 22/23/24 · Telex 8 591 606 wpat

5600 Wuppertal 2, den  25.1o.1982

Kennwort: "Kundenidentifikation
Fall 297"

Firma Maatschappij van Berkel's Patent N.V.
Keileweg 5, Rotterdam / Niederlande

Verkaufsanlage für Waren

Die Erfindung  bezieht sich auf eine Verkaufsanlage der im Gattungsbegriff des Anspruches 1 genannten Art. Bei dieser bekannten Anlage erfolgte die Nummernausgabe am Eingang zum Zwecke, um die Reihenfolge der Bedienung  der Kunden festzulegen. Es besteht zunehmend die Tendenz bei  den Kunden, keine vorgepackten Produkte bei Frischware, wie Fleisch, Wurst, Käse, Obst oder dergleichen zu akzeptieren, sondern die Ware an  der Bedienungsstelle individuell auszusuchen und  als Portion vom Verkäufer verpacken zu lassen. An dem zugehörigen Preisangabegerät der Bedienungsstelle wurde der Einzelpreis der Warenportion ermittelt, auf dem Bon  des Druckers festgehalten, der auf der Warenportion aufgebracht wurde, doch an  der Kasse war erneut die Eingabe des Einzelpreises dieser Warenportion nötig, damit die endgültige Abrechnung des gesamten Einkaufs erfolgen konnte. Dies gab Anlaß zu Irrtum. Ein weiterer Mangel der  bekannten Anlagen bestand in keiner ausreichenden Sicherheit  gegenüber Diebstahl. Es konnte vorkommen, daß ein Kunde an der Kasse nicht alle Warenportionen vorlegt, die von ihm an  den Bedienungsstellen erworben worden sind. Bei den bekannten Anlagen war auch keine ausreichende Kontrolle des eintretenden und des scheinbar ohne Ware die Anlage wieder verlassenden Kunden möglich. Mangelhaft war auch die Beaufsichtigung des Verkaufspersonals, und der Überblick über den Arbeitsablauf an den verschiedenen Bedienungsstellen und Zahlstellen.

Der Erfindung liegt die Auf-gabe zugrunde, eine Verkaufsanlage der im Gattungsbegriff des Anspruches 1 genannten Art zu entwickeln, die einen Irrtum in der Bedienungsweise weitgehend ausschließt, einen Diebstahl außerordentlich erschwert und eine gute Kontrolle und Übersicht über die Vorgänge im Betrieb der Anlage ermöglicht.

Dies wird erfindungsgemäß durch die im Kennzeichen des Anspruches 1 angeführten Maßnahmen erreicht. Die Ausgabe einer Identifikationskarte ist ein durch eine Kenngröße gekennzeichneter Ausweis des betreffenden Kunden, der an allen entscheidenden Betriebsstellen der Verkaufsanlage, nämlich den Bedienungsstellen für die Waren und den Zahlstellen für die Abrechnung alle vom Kunden vollzogenen Handlungen bequem überwachen läßt. Dies erfolgt durch die Lesestellen für die maschinenlesbare Schrift dieser Identitätskarte an allen Stellen, wo Waren ausgegeben werden oder Bezahlungen der Waren erfolgen. Alles, was an einer Bedienungsstelle über die dem Kunden ausgehändigte Warenportion preislich vermerkt wird, wird unter der Kenngröße dieser Identitätskarte im Zentralcomputer festgehalten, so daß an der Zahlstelle die Daten nicht mehr eingegeben werden brauchen, sondern durch Ablesen der Kenngröße auf dem dortigen Lesegerät die Daten aus dem Zentralcomputer für diese Kenngröße abgerufen werden, weshalb die einem möglichen Irrtum unterworfene erneute Eingabe der Daten entfällt.

Dadurch ist stets kontrollierbar, wieviele Kunden mit Identifikationskarten in der Verkaufsanlage zu einer gegebenen Zeit aktiv sind. Durch die Lesegeräte an den

-3-

Bedienungsstellen, die bestimmten Verkäufern zugeordnet sind, ist auch eine Beaufsichtigung des Verkaufspersonals möglich und ein rationeller Einsatz von Personal und Waren übersichtlich zu steuern. Wegen Lesegeräte an den Zahlstellen ist auch die dort abgewickelte Arbeit überprüfbar und steuerbar.

Sofern ein Kunde nicht unmittelbar selbst die Ware an den Bedienungsstellen entnehmen kann, ist ein Bon-Drucker an den Bedienungsstellen nicht erforderlich, der die Aufgabe hat, ordnungsgemäß vom Kunden ausgehändigte Warenportionen zu kennzeichnen. An der Zahlstelle kann der zu bezahlende Betrag der Preissumme aller erworbenen Warenportionen in einem Display angezeigt werden, so daß ein Quittungsdrucker für die Abrechnung nicht unbedingt erforderlich ist. Wegen der Registriergeräte am Eingang ist jede in die Verkaufsanlage eingebrachte Identitätskarte dem Zentralcomputer bekannt und er setzt die sonst blockierten Geräte an den Bedienungsstellen und gegebenenfalls Zahlstellen für diese Karte frei. Ohne registrierte Identitätskarte kann also kein Kunde Waren erwerben. Ein Diebstahl ist daher weitgehend ausgeschlossen. Beim Verlassen der Anlage wird über ein Löschungsgerät die betreffende Identitätskarte erfaßt und der Zentralcomputer sperrt wieder die Bedienungsgeräte für diese Kennziffer. Weil dieses Löschungsgerät eng mit der Kasse der Zahlstelle verbunden ist und im einfachsten Fall von der Kasse selbst gebildet sein kann, ist sichergestellt, daß eine Löschung der Karte erst erfolgt, wenn an der Kasse die im Zentralcomputer eingespeicherten Einkaufsdaten des betreffenden Kunden zur Abrechnung gekommen sind. Das Abrechnen der Beträge kann durch Barzahlung oder Überreichung eines Schecks oder ein sonstiges automatisches Zahlungssystem erfolgen.

-4-

Bei kleineren Verkaufsanlagen oder bei Einsatz besonderen Personals ist durch Sichtkontrolle möglich sicherzustellen, daß jeder Kunde, der die Anlage betritt, eine Identifikationskarte erwirbt und registriert und die Anlage nicht wieder verläßt, ohne diese an der Zahlstelle vorgelegt zu haben. Einfacher ist es natürlich, dies automatisch zu überwachen, was durch eine Einzelpersonen durchlassende Sperre möglich ist, die vom Registriergerät und vom Löschungsgerät beim Ablesen der Identifikationskarte betätigt wird. Dadurch ist von vornherein sichergestellt, daß jeder die Anlage betretende Kunde eine Karte erworben hat.

Im einfachsten Fall kann die Ausgabestelle für Identifikationskarten am Eingang zugleich als Registriergerät fungieren. Dies ist dann ausführbar, wenn in der Anlage nur für einen Einkauf gültige Zeitkarten ausgegeben werden, die beim Verlassen der Anlage am Ausgang dem Kunden wieder abgenommen werden. Letzteres kann durch das Löschungsgerät automatisch erfolgen. Für bestimmte vertrauenswürdige Kunden wird man aber bestrebt sein, eine Dauerkarte zu übergeben, die für eine beliebige Anzahl von Einkäufen gültig ist. Eine solche Dauerkarte befindet sich normalerweise bereits im Besitz des Kunden, wenn er die Anlage betritt. Daher ist es in solchen Fällen erwünscht, ein von der Ausgabe der Karte gesondertes Registriergerät vorzusehen, welches den Zentralcomputer und die von ihm gesteuerten Geräte wirksam setzt. Ein solches Registriergerät kann Zeitkarten und Dauerkarten von Kunden gleich gut behandeln. Ein solches Registriergerät kann auch für eine Mehrfachregistrierung mehrerer Identifikationskarten eines Kunden dienlich sein. Es kommt nämlich vor, daß ein Kunde nicht nur für sich selbst, sondern im Auftrag Dritter Einkäufe ausführt, die getrennt voneinander erfaßt werden sollen. In diesem Fall genügt es, wenn der Kunde außer einer Eigenkarte auch noch eine oder mehrere Fremdkarten für Dritte mitbringt, auf die

-5-

er dann die gewünschten gesonderten Einkäufe tätigt.
Am eingangsseitigen Mehrfach-Registriergerät werden die
zu einem Kunden gehörenden verschiedenen Karten in ihrer
Kopplung an diese Kundenperson erfaßt und dieser Tatbestand im Zentralcomputer eingespeichert. Kommt der
Kunde nun an die Kasse einer Zahlstelle, so wird dort
sofort vom Zentralcomputer gemeldet, daß der Kunde die
gegebene Anzahl von Karten mitgebracht und hierfür die
jeweils abrufbaren Einkäufe getätigt hat. Es ist daher
von vornherein ausgeschlossen, daß der Kunde zwar mit
mehreren Karten Einkäufe tätigt, aber an der Zahlstelle
die Einkäufe für eine der Identifikationskarten unterschlägt.
Diese Eigenbzw. Fremdkarten können sowohl als Zeitkarten
als auch als Dauerkarten ausgebildet sein.

Es empfiehlt sich in der Verkaufsanlage auch noch ein
Anzeigegerät vorzusehen, worin für die zur jeweiligen
Zeit im Laden befindlichen Personen die zugehörigen
Kenngrößen ihrer Identifikationskarten ablesbar sind.
Dort kann auch durch einen entsprechenden Vermerk zum
Ausdruck kommen, welche Fremdkarten ein bestimmter
Kunde außer seiner Eigenkarte mitgebracht und registriert
hat.

In der Zeichnung ist die Erfindung in einem Ausführungsbeispiel dargestellt. Es zeigen:

Fig. 1 im Schema die Draufsicht auf den Aufbau
einer erfindungsgemäßen Verkaufsanlage,

Fig. 2 und 3 die Vorder- und Rückansicht einer in
der Anlage von Fig. 1 verwendbaren Identifikationskarte, die als Zeitkarte für einen
einzelnen Einkauf gültig ist,

Fig. 4 die Vorderansicht einer weiteren Identifikationskarte, die als Dauerkarte aneinen besonderen vertrauenswürdigen Kunden ausgegeben wird und eine beliebige Anzahl von Einkäufen ermöglicht,

Fig. 5 zeigt die Ausführung eines an einer Bedienungsstelle der Anlage verwendbaren Preisangabegerätes, das hier als preisrechnende Ladenwaage ausgebildet ist,

Fig. 6 die Draufsicht auf einen Bon, der von einem zum Preisangabegerät von Fig. 5 gehörenden Drucker ausgegeben wird und

Fig. 7 die Kennzeichnung einer verpackten Warenportion mit dem aus Fig. 6 ersichtlichen Bon.

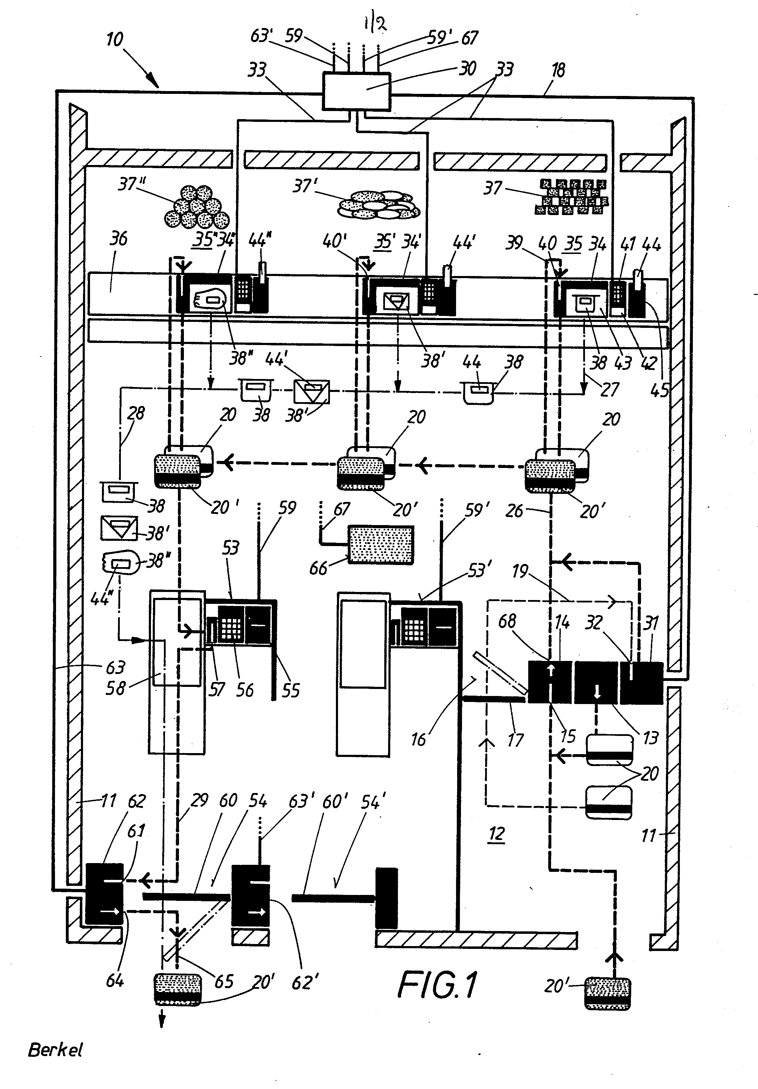

In Fig. 1 ist ein durch Mauern 11 umgrenzter Laden gezeigt, worin die erfindungsgemäße Anlage 1o untergebracht ist. Die zur Anlage gehörenden Bauteile sind in ihrem Aufbau und in ihrer Wirkungsweise am besten verständlich, wenn man den Weg eines Kunden durch diese Verkaufsanlage verfolgt.

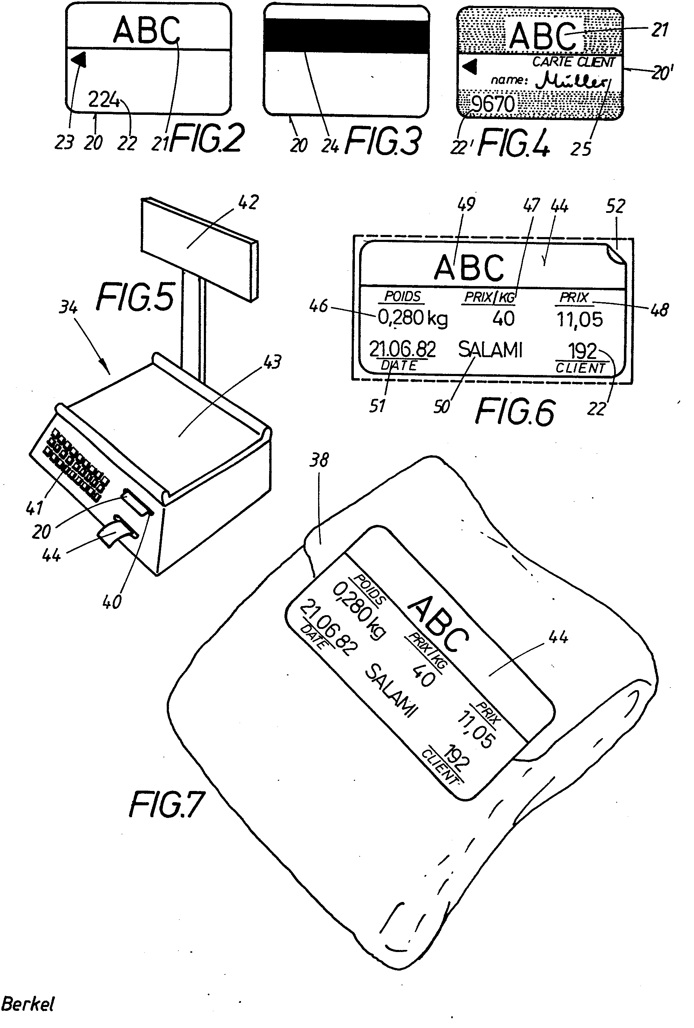

Betritt der Kunde den Laden, so kommt er zunächst in eine Vorhalle 12, worin ein Ausgabegerät 13 für Identifikationskarten und ein Registriergerät 14 für diese Karten vorgesehen sind. Das Aussehen einer solchen Karte 2o ergibt sich zunächst aus Fig. 2 und 3.

Die Karte 2o besitzt auf ihrer Vorderseite, gemäß Fig. 2, zweckmäßigerweise die Firmenbezeichnung 21 des Unternehmens und eine Kenngröße 22, für welche hier aus einer gegebenen Nummernfolge eine Kennziffer verwendet wird, hier "224". Ein Markierungspfeil 23 auf der Karte 2o verdeutlicht, mit welcher Seite und mit welchem Ende die Karte 2o in einen Schlitz 15 des Registriergerätes 14 eingesteckt werden muß. Der Schlitz 15 kennzeichnet eine Lesestelle dieses Registriergerätes, wo ein maschinenlesbares Feld 24 abgetastet wird, das sich zweckmäßigerweise, wie Fig. 3 zeigt, auf der Rückseite der Karte 2o befindet und aus einem Magnetstufen besteht, worauf die Kenngröße 22 der Karte 2o in maschinenlesbarer magnetischer Aufzeichnung aufgebracht ist.

Die am Ausgabegerät 13 vom Kunden zu erwerbende Karte ist eine Zeitkarte 2o, die für den jeweiligen Einkaufsgang nur gültig ist und nach dem Verlassen des Ladens wieder zurückbehalten wird, was noch näher beschrieben wird. Der Kunde kann aber auch eine aus Fig. 4 ersichtliche Dauerkarte 2o' erhalten, die er schon beim Betreten des Ladens bei sich hat. Eine solche Dauerkarte 2o' wird an treue, vertrauenswürdige Kunden ausgegeben und ist für eine beliebige Anzahl von Einkäufen verwendbar. Eine solche Karte 2o' ist in Fig. 4 dargestellt. Vorderseitig hat sie zunächst die bereits im Zusammenhang mit Fig. 2 erläuterten Angaben, wobei zweckmäßigerweise diese Dauerkarte 2o' durch eine besondere Kenngröße 22' erkennbar ist, die auch in entsprechender Weise rückseitig auf dem maschinenlesbaren Feld 24 vermerkt ist und von den Geräten beim Ablesen als Dauerkarte sofort erkannt wird. Die Dauerkarte 2o' hat auch vorderseitig ein weiteres Feld 25, wo der persönliche Name des Kunden visuell lesbar eingetragen ist.

Eine solche Karte, sei es eine Zeitkarte 2o oder eine Dauerkarte 2o' identifiziert einen Kunden während des nun folgenden Einkaufs. Wird die Karte 2o bzw. 2o' in die Lesestelle 15 des Registriergerätes 14 eingesteckt, so öffnet sich am Eingang 16 eine Sperre 17 automatisch und läßt den Kunden in das Innere der Verkaufsanlage 1o ein. Die Karte 2o, 2o' wird vom Registriergerät 14 an einer Ausgabestelle 68 jenseits der Sperre wieder dem Kunden zurückgegeben. Der Kunde kann außer der einen Karte auch noch mehrere weitere Karten 2o bzw. 2o' im Auftrage von dritten Personen mitnehmen, um für diese zugleich von

-8-

seinen Einkäufen getrennte Einkäufe abzuwickeln.
Dies ist im Schema der Fig. 1 in der Vorhalle 12 durch
die Darstellung mehrerer vom Kunden mitzunehmender Karten
angedeutet, von denen für einen Durchlaß am Eingang 16 nur eine in die Lesestelle 15 eingeschoben zu
werden braucht. Durch das Registriergerät 14 wird über
die angedeutete Leitung 18 ein die Kenngröße enthaltendes
Signal an einen Zentralcomputer 3o weitergeleitet,
wo für die weiteren Einkaufsvorgänge diese Kenngröße 22
bzw. 22' als Adresse im Speicher des Computers 3o verwendet wird, wie sich aus dem Nachfolgenden ergibt.

Sofern der Kunde außer auf seine eigenen Karten 2o bzw.
2o' auch noch auf die erwähnten Karten 2o bzw. 2o'
von Dritten gesonderte Einkäufe tätigen will, muß er,
wie der gestrichelte Weg 19 in Fig. 1 verdeutlicht,
zu einem Mehrfach-Registriergerät 31 gehen und in den
dortigen Schlitz einer Lesestelle 32 außer seiner Eigenkarte auch die zugehörigen Fremdkarten registrieren,
die dann an seine Person gebunden sind.

Die Benutzung der Registriergeräte 14 und gegebenenfalls
31 ist eine unverzichtbare Bedingung für den Einkauf,
denn ohne Registrierung der abgelesenen Kenngrößen 22,
22' im Zentralcomputer 3o sind alle Geräte in der Anlage
blockiert, und daher für den Einkauf mit der betreffenden Karte 2o, 2o' unwirksam. Ist die Registrierung aber
im Zentralcomputer 3o erfolgt, so wird über die angedeuteten Leitungen 33 ein Steuerimpuls an Geräte 34, 34',
34'', von Bedienungsstellen 35, 35', 35'' weitergegeben,
die an einem Ladentisch 36 vorgesehen sind. Durch diesen
Steuerimpuls werden diese Geräte für die betreffende
Kenngröße wirksam gesetzt. An jeder der Bedienungsstellen
35, 35', 35'' steht ein bestimmtes Sortiment von Waren
37, 37', 37'' zur Verfügung, aus denen der Kunde nach
Art und Menge die gewünschte Portion bestimmen kann.

Wie aus dem gestrichelt weitergeführten Weg 26 erkennbar, kommt der Kunde zunächst an die erste Bedienungsstelle 35, wo er die Ware auswählt. Auf dem Ladentisch 36 befindet sich eine preisrechnende Waage 34, wo die ausgewählte Portion 38 gewogen und der zugehörige Preis ermittelt wird. Das Aussehen einer solchen Waage 34 ist aus Fig. 5 erkennbar. Um die Waage 34 wirksam setzen zu können, muß der Kunde dem Verkäufer seine Identitätskarte 2o, 2o' bzw. die Fremdkarte für diesen Einkauf geben, worauf der Verkäufer diese Karte, was durch den strichpunktierten Handhabungsweg 39 in Fig. 1 angedeutet ist, in eine Lesestelle 4o dieses Gerätes 34 einsteckt, wodurch die zweite notwendige Bedingung für die Wirksamkeit des Gerätes 34 erfüllt ist, denn die erste Bedingung kommt, wie erwähnt wurde, durch einen Steuerimpuls über die Leitung 33 vom Computer 3o zustande.

In der konkreten Ausführung eines solchen Gerätes 34 in Fig. 5 ist erkennbar, was schematisch in Fig. 1 angedeutet ist, daß eine Tastatur 41 die Eingabe des Einheitspreises der vom Kunden gewünschten Ware ermöglicht, z.B. eines Kilogramm-Preises. Die Eingabe kann auch durch Betätigung einer die betreffende Ware kennzeichnenden Code-Nr. erfolgen nach dem bekannten PLU-System, dessen Speicher zentral auch im erwähnten Computer 3o vorgesehen sein kann weil eine Leitung 33 für die Kommunikation ohnehin erforderlich ist. Die ausgewählte Portion 38 der Ware 37 befindet sich auf der Waagschale 43 des Gerätes 34 und die dabei ermittelten und eingegebenen Daten werden auf einer Anzeigeeinrichtung 42 für den Kunden und den Verkäufer sichtbar angegeben. Ist die Auswahl der Ware perfekt, so wird eine Funktionstaste der Tastatur 41 betätigt, woraufhin zweierlei geschieht. Zunächst werden die Einkaufsdaten über die Leitung 33 dem Zentralcomputer 3o gemeldet und dort unter der Adresse der abgelesenen Kenngröße 22 bzw. 22' gespeichert. Dann ist das Gerät 34 mit einem Drucker verbunden, der auf einem Bon 44, wie er in Fig. 6 gezeigt ist, die gültigen Daten für diesen Kauf festhält.

Der in Fig. 1 schematisch angedeutete Drucker 45
ist beim Gerät von Fig. 5 mit in das Gehäuse eingebaut und druckt die maßgeblichen Daten auf das
Ende eines fortlaufenden Streifens, dessen abtrennbarer
Endabschnitt den Bon 44 von Fig. 6 bildet.

Wie Fig. 6 verdeutlicht, können verschiedene Daten
auf dem Bon 44 aufgebracht sein, wie Individualgewicht 46 der ausgewählten Portion, Einheitspreis 47
der betreffenden Ware und der auf die ausgewählte Menge
bezogene Individualpreis 48 der Warenportion. Außer der
Firmenbezeichnung 49 können durch den alphanumerischen
Drucker 45 auch noch die Produktart 5o visuell ablesbar
angegeben, die Kenngröße 22 des Kunden ausweislich der
in den Leseschlitz 4o eingeschobenen Identitätskarte 2o
und das Einkaufsdatum 51 gegebenenfalls mit Uhrzeit. Der Bon 44 ist ein Selbstklebeetikett, von dem
rückseitig die übliche Schutzfolie 52 abziehbar ist.
Das Etikett 44kann nun, wie Fig. 7 verdeutlicht, auf
die abgepackte Warenportion 38 aufgeklebt werden. Diese
fertige Warenportion 38 wird dem Kunden übergeben,
wie aus der strichpunktierten Weglinie 27 in Fig. 1
erkennbar ist. Der Kunde erhält, wie aus dem erwähnten
gestrichelten Handhabungsweg 39 in Fig. 1 zu erkennen
ist, seine Karte 2o bzw. 2o' wieder zurück und kann sich
unter Mitnahme der durch den Bon 44 gekennzeichneten
Ware 38 zur nächsten Bedienungsstelle 35' begeben, um
von den dortigen Waren 37' nach Art und Menge eine
Auswahl zu treffen. Dieser Vorgang vollzieht sich in
entsprechender Weise und führt zu einer abgepackten
in Fig. 1 angedeuteten Portion 38', die in analoger
Weise durch einen entsprechenden Bon 44' gekennzeichnet
worden ist. Die Einkaufsdaten an dieser zweiten Bedienungsstelle 35' werden in entsprechender Weise in
dem Zentralcomputer 3o unter der Adresse der Kenngröße
22 bzw. 22' der in der dortigen Lesestelle 4o' des Gerätes 34' eingesteckten Identifizierungskarte 2o, 2o'
registriert.

Diese Vorgänge können sich an einer oder mehreren weiteren Bedienungsstellen 35'' in entsprechender Weise wiederholen, wenn dort weitere Warenmengen eines gegebenen Sortiments 37'' vom Kunden unter Verwendung der maßgeblichen Karten 2o, 2o' erworben werden. Das Ergebnis ist auch hier eine weitere verpackte Warenportion 38'', die ihrerseits mit dem maßgeblichen Bon 44'' gekennzeichnet ist. Der Kunde bewegt sich auf der strichpunktierten in Fig. 1 angedeuteten Weglinie 28 im Laden weiter und bringt die erworbenen Portionen 38, 38', 38'' schließlich zu einer der verschiedenen Zahlstellen 53, 53', wo die Abrechnung aller Einkaufsvorgänge des Kunden erfolgt.

Die Zahlstellen 53, 53' sind vor den verschiedenen Ausgängen 54, 54' des Ladens vorgesehen und umfassen jeweils eine Kasse 55 mit einer, verschiedene Funktionstasten aufweisenden Tastatur 56 und eine Lesestelle 57 für die maschinenleserlich aufgezeichneten Kenngrößen 22 und den Identifikationskarten 2o, 2o'. Die auf dem Feld 24 der Karten vorgesehenen Aufzeichnungen erfolgen auf magnetischem Wege, weshalb alle hier angesprochenen Lesestellen 15, 4o, 57 natürlich magnetische Lesestellen sind. Es versteht sich, daß die Aufzeichnungen auch durch andere maschinenlesbare Mittel erfolgen könnte, wie z.B. Lochkarten oder eine Strichcodierung. Beim Aushändigen seiner Karte 2o, 2o' an der Zahlstelle 53 legt der Kunde zugleich die erworbenen Warenportionen 38, 38', 38'' auf ein übliches Transportband 58 der Kasse. Sofern teilweise auch eine Selbstbedienung der Kunden im Laden erfolgt, wird zweckmäßigerweise die Anzahl und die Kennzeichnung der vorgelegten Warenportionen , verglichen mit den an der Kasse abgerufenen Daten, die aufgrund der abgelesenen Kenngröße an der dortigen Lesestelle 57 der zugehörigen Karte 2o bzw. 2o' vom Zentralcomputer 3o über die Leitung 59 der Zahlstelle 53 zugeführt werden. Alle erforderlichen Daten und die zu

-12-

bezahlenden Beträge erscheinen auf einer Anzeige, die in
den Fig. nicht näher dargestellt ist. Durch Betätigen
einer Funktionstaste oder dergleichen können diese Daten
auch auf einem bei der Zahlstelle 53 vorgesehenen
QuittungsDrucker aufgezeichnet werden, so daß dem Kunden
die Quittung als Beleg für die einzelnen Einkaufsvorgänge
auf Grund dieser Karte 2o, 2o' übergeben werden
kann.

Sofern der betreffende Kunde außer Einkäufen auf seine
eigene Karte 2o, 2o' auch noch im Auftrage Dritter
auf Fremdkarten 2o, 2o' weitere Einkäufe getätigt hat,
nachdem er all diese Karten am erwähnten Mehrfach-
Registriergerät 31 angemeldet hat, so erscheint an der
Zahlstelle 53 ein vom Computer 3o ausgelöster Hinweis,
der auf die Verbindung dieser Karten aufmerksam macht.
Der Kunde kann daher von der Bedienungsperson aufgefordert werden, auch die Abrechnung für diese weiteren
benutzten Karten auszuführen und hierzu die Waren zu
Kontrollzwecken vorzulegen. Nach ordnungsgemäßer Abrechnung an der Zahlstelle 53 werden dem Kunden seine Karte 2o
bzw. 2o' und eventuelle Fremdkarten wieder zurückgegeben,
damit er durch den überwachten Ausgang 54 bzw. 54' den
Laden verlassen kann. Der weitere Weg des Kunden mit
seiner Karte 2o bzw. 2o' ist durch die Strichlinie 29
in Fig. 1 verdeutlicht.

Die Ausgänge 54, 54' sind normalerweise durch Türen 6o,
6o' versperrt. Die Türen öffnen sich, wenn der Kunde
seine Karte 2o bzw. 2o' in die Lesestelle 61 eines
Löschungsgerätes 62 einschiebt. Sind für den Kunden im
Computer 3o mehrere Karten für diesen Einkauf reserviert
worden, weil er im Auftrag Dritter Käufe zu tätigen hatte,
so kann auch am Löschungsgerät 62 eine entsprechende Anzeige erscheinen, die den Kunden auffordert, an die Lesestelle 61
auch die übrigen Karten einzuführen. Ist dies ordnungsgemäß für alle Karten erfolgt, so wird über eine

-13-

Leitung 63 vom Zentralcomputer 3o ein Öffnungsimpuls
an die zugehörige Tür 6o gegeben, der in die strichpunktierte Offenstellung übergeht und dadurch den Durchgang für den Kunden frei gibt. Die nur für einen Einkauf
gültigen Zeitkarten gemäß Fig. 2 und 3 werden vom Löschungsgerät zurückbehalten, aber Dauerkarten 2o' gibt das
Löschungsgerät 62 an der angedeuteten Ausgabestelle 64
dem Kunden wieder zurück, der sie ausweislich der
gestrichelten Linie 65 wieder mitnimmt, um sie für
einen späteren Einkauf zugleich wieder verfügbar zu haben.

Das Löschungsgerät 62 meldet die abgelesenen Karten 2o, 2o'
über die erwähnte Leitung 63 dem Zentralcomputer 3o und
vergewissert sich dabei, daß vorausgehend an einer der
Zahlstellen 53, 53' die ordnungsgemäße Abrechnung der
Einkäufe für die Einzelkarte bzw. für eine Gruppe von
Karten des betreffenden Kunden ausgeführt worden ist.
Die Zahlstellen 53, 53' geben nämlich über ihre Leitungen
59 bzw. 59' ein entsprechendes Signal an den Zentralcomputer 3o
über die erfolgte Abrechnung. Der Kunde kann also nicht
ohne Erledigung der Rechnung an den Kassen durch die
Sperre eines der Ausgänge 54, 54' den Laden verlassen;
die Karten werden nämlich von den Löschungsgeräten 62,
62' nicht akzeptiert. Ist aber die Abrechnung ordnungsgemäß für die Einzelkarte bzw. Gruppe von Karten 2o, 2o'
ausgeführt worden, so wird nicht nur die gesperrte Tür 6o
bzw. 6o' für den betreffenden Kunden geöffnet, sondern
auch die unter der Adresse der betreffenden Kenngrößen 22
bzw. 22' vermerkten Daten gelöscht, sofern sie nicht aus
anderen Gründen, wie z.B. zu Bilanzzwecken, zur Führung
des Lagerbestands oder aus Gründen der Statistik im
Speicher aufbewahrt werden. Die Kenngrößen 22, 22' werden
aber wieder freigegeben, um für einen neuen Kauf wieder
zur Verfügung zu stehen. Bei diesem Löschen werden vom
Zentralcomputer 3o wieder alle maßgeblichen Geräte 34, 34',
34'' an den verschiedenen Bedienungsstellen 35, 35', 35'',

-14-

und gegebenenfalls die verschiedenen Geräte an den Zahlstellen 53, 53' für die betreffende Kenngröße der Karte 2o, 2o' wieder gesperrt. Hat sich ein Kunden mit einer solchen nicht registrierten Karte eingeschlichen, so kann er, auch wenn er diese Karte vorlegt, keine wirksamen Käufe ausführen und auch nicht mittels dieser Karte den Laden verlassen. Dadurch sind Irrtümer und Betrug ausgeschlossen.

Es ist in dem Laden schließlich noch ein Anzeigegerät 66 vorgesehen, das über die angedeutete Leitung 67 mit dem Zentralcomputer 3o verbunden und von diesem aus gesteuert wird. Das Anzeigegerät 66 macht durch Angabe der erfaßten Kenngrößen 22, 22' kund, welche und wieviele Identifikationskarten 2o, 2o' im Ladenraum zur jeweiligen Zeit kursieren. Dabei wird auch angezeigt, welche der Karten miteinander verbunden sind. Dadurch ist es für alle Beteiligten erkennbar, welche Karten im Umlauf sind und welche Kartengruppe zu einer Person gehören. Es versteht sich, daß ein solches Anzeigegerät 66 nicht nur einmal im Laden, sondern an allen maßgeblichen Arbeitsstellen vorgesehen sein kann. Dies gilt insbesondere für die Kassen an den verschiedenen Zahlstellen 53, 53'. Zur Eigenkontrolle des Kunden können solche Anzeigen natürlich auch bei den Löschungsgeräten 62, 62' vorgesehen sein.

PATENTANWÄLTE

DIPL.-PHYS. **BUSE** · DIPL.-PHYS. **MENTZEL** · DIPL.-ING. **LUDEWIG**

Unterdörnen 114 · Postfach 20 02 10 · 5600 Wuppertal 2 · Fernruf (02 02) 55 70 22/23/24 · Telex 8 591 606 wpat

5600 Wuppertal 2, den 25.1o.82

Kennwort: "Kundenidentifikation,
Fall 297"

Bezugszeichenliste

| 1o  | Anlage |
| 11  | Mauer |
| 12  | Vorhalle |
| 13  | Ausgabegerät |
| 14  | Registriergerät |
| 15  | Lesestelle, Schlitz |
| 16  | Eingang |
| 17  | Sperr-Tür |
| 18  | Leitung |
| 19  | Weglinie |
| 2o  | Identifikationskarte, Zeitkarte |
| 2o' | Identifikationskarte, Dauerkarte |
| 21  | Firmenbezeichnung |
| 22  | Kenngröße von 2o |
| 22' | Kenngröße von 2o' |
| 23  | Markierungspfeil |
| 24  | Maschinenlesbares Feld, Magnetaufzeichnung |
| 25  | Namensfeld |
| 26  | Weglinie |
| 27  | Weglinie |
| 28  | Weglinie |
| 29  | Weglinie |
| 3o  | Zentralcomputer |
| 31  | Mehrfach-Registriergerät |
| 32  | Lesestelle |
| 33  | Leitung |

| | |
|---|---|
| 34 | Preisangabegerät, preisrechnende Waage |
| 34' | Preisangabegerät |
| 34'' | Preisangabegerät |
| 35 | Bedienungsstelle |
| 35' | Bedienungsstelle |
| 35'' | Bedienungsstelle |
| 36 | Ladentisch |
| 37 | Warensortiment |
| 37' | Warensortiment |
| 37'' | Warensortiment |
| 38 | Portion |
| 38' | Portion |
| 38'' | Portion |
| 39 | Handhabungsweg |
| 4o | Lesestelle |
| 41 | Tastatur |
| 42 | Anzeigeeinrichtuung |
| 43 | Waagschale |
| 44 | Bon |
| 44' | Bon |
| 44'' | Bon |
| 45 | Drucker |
| 46 | Individualgewicht |
| 47 | Einheitspreis |
| 48 | Einzelpreis |
| 49 | Firmenname |
| 5o | Produktart |
| 51 | Datum |
| 52 | Schutzfolie |
| 53 | Zahlstelle |
| 53' | Zahlstelle |
| 54 | Ausgang |
| 54' | Ausgang |
| 55 | Kasse |
| 56 | Tastatur |
| 57 | Lesestelle |

| | |
|----|----|
| 58 | Transportband |
| 59 | Leitung |
| 6o | Tür-Sperre |
| 6o' | Tür-Sperre |
| 61 | Lesestelle |
| 62 | Löschungsgerät |
| 62' | Löschungsgerät |
| 63 | Leitung für 62 |
| 63' | Leitung für 62' |
| 64 | Ausgabestelle |
| 65 | Weglinie |
| 66 | Anzeigegerät |
| 67 | Leitung |
| 68 | Ausgabestelle bei 14 |

_l_

**PATENTANWÄLTE**

**DIPL.-PHYS. BUSE · DIPL.-PHYS. MENTZEL · DIPL.-ING. LUDEWIG**

Unterdörnen 114 · Postfach 200210 · 5600 Wuppertal 2 · Fernruf (0202) 55 70 22/23/24 · Telex 8 591 606 wpat

**5600 Wuppertal 2, den** 25.1o.82

56

Kennwort: "Kundenidentifikation,

Fall 297"

Firma Maatschappij van Berkel's Patent N.V.,

Keileweg 5, Rotterdam / Niederlande

A n s p r ü c h e :

1.) Verkaufsanlage für Waren, vorzugsweise Waren der Lebensmittelbranche, umfassend

einen kontrollierbaren Kunden-Eingang mit einer kundenweisen Nummernausgabe für die spätere Bedienung der Kunden,

wenigstens eine, vorzugsweise aber mehrere Bedienungsstellen für Waren eines bestimmten Sortiments,

mit elektronischen Preisangabegeräten, wie preisrechnenden Ladenwaagen, für die jeweilige Portion der vom Kunden nach Art und Menge ausgewählten Waren,

und ggf. einem den jeweils angegebenen Preis registrierenden Bon-Drucker zur Kennzeichnung der ausgewählten, ordnungsgemäß dem Kunden ausgehändigten Warenportionen,

und wenigstens eine Zahlstelle vor dem Kunden-Ausgang mit einer Kasse und ggf. einem Quittungs-Drucker zum Abrechnen der Preissumme aller bei diesem Einkauf erworbenen Warenportionen des jeweiligen Kunden,

g e k e n n z e i c h n e t   d u r c h

die Ausgabe (13) einer den Kunden durch eine Kenngröße (22; 22'), wie eine Kennziffer, identifizierenden Karten  Identifikationskarten (2o;2o') vor dem Eingang (16) mit einem die Kenngröße (22; 22') enthaltenden maschinenlesbaren
Feld (24) auf der Identitäts-karte (2o, 2o')

ein Registriergerät (15) am Eingang (16) mit einer
Lesestelle (15) für die Identitätskarte (2o; 2o')
des betreffenden Kunden,

das an einen Zentralcomputer (3o) angeschlossen
ist, das im dortigen Speicher die abgelesene Kenngröße (22; 22') als Adresse aufnimmt für alle
weiteren zu dieser Identitätskarte (2o; 2o')
anfallenden Einkaufsdaten (46, 47, 48, 5o, 51)
und das die ebenfalls am Zentralcomputer
(3o) angeschlossenen, normalerweise blockierten Geräte (34; 34'; 34'') aller Bedienungsstellen (35; 35'; 35'') und gegebenenfalls
Zahlstellen (53; 53') für diese Idenditätskarte (2o; 2o') freigibt,

eine Lesestelle (4o) für Identitätskarten (2o;
2o') an jedem Preisangabegerät (34; 34'; 34'')
der Bedienungsstellen 35; 35'; 35''),

welche die jeweils ermittelten Daten (46,
47, 48, 5o, 51) der vom Kunden erworbenen
Warenportionen (38; 38'; 38'') unter der
Adresse der abgelesenen Kenngröße (22; 22')
seiner Identitätskarte (2o; 2o') in den
Zentralcomputer (3o) eingibt,

eine Lesestelle (57) für Identitätskarten (2o;
2o') an jeder Kasse (55) der Zahlstellen (53; 53')

welche die unter der Adresse der abgelesenen Kenngröße (22; 22') im Zentral-

-3-

computer (3o) abgespeicherten Daten (46, 47, 48, 5o, 51) für die betreffende Identitätskarte (2o; 2o') abruft und dem Quittungsdrucker zuführt,

und einem Löschungsgerät (62 62') am Ausgang (54, 54') mit einer Lesestelle (61) füt Identitätskarten (2o;2o'), welches für die abgelesene Kenngröße sowohl die Geräte aller Bedienungs- und gegebenenfalls Zahlstellen als auch den Zentralcomputer sperrt.

2.) Verkaufsanlage nach Anspruch 1, dadurch gekennzeichnet, daß das Registriergerät (14) und/oder das Löschungsgerät (62) beim Ablesen einer Identifikations-karte (2o;2o') eine Sperre (17; 6o) zum Durchlaß einer Kunden-Person betätigt.

3.) Verkaufsanlage nach Anspruch 1 oder 2, gekennzeichnet durch ein an den Zentralcomputer (3o) angeschlossenes Anzeigegerät (66) für alle zur jeweiligen Zeit registrierten aber noch nicht wieder gelöschten Kenngrößen (22; 22') der in der Verkaufsanlage benutzten Identifikationskarten (2o; 2o')

4.) Verkaufsanlage nach einem oder mehreren der Ansprüche 1 - 3, dadurch gekennzeichnet, daß die Kasse (55, 56) nach Ausgabe der Quittung zugleich als Löschungsgerät (62) für die Kenngröße (22;22') der dabei er-faßten Identifikationskarte (2o;2o') wirksam ist.

5.) Verkaufsanlage nach einem oder mehreren Ansprüchen 1 - 4, dadurch gekennzeichnet, daß am Eingang (16) ein Mehrfach-Registriergerät (31) mit Lesestellen (32) für mehrere von einem Kunden mitgebrachten Identi-fikationskarten (2o;2o') angeordnet ist, nämlich für eine Eigenkarte und eine im Auftrag von Dritten mitgeführte Fremdkarte, wobei die vom Kunden voll-

- 4 -

zogenen Einkäufe zwar kartenweise gesondert erfaßt und im Zentralcomputer (3o) gespeichert werden, aber durch einen Vermerk im Zentralcomputer (3o) miteinander gekoppelt sind.

6.) Verkaufsanlage nach Anspruch 5, dadurch gekennzeichnet, daß die Kopplung mehrerer registrierter Identifikationskarten (2o;2o') eines Kunden an der Zahlstelle (53; 53'), und/oder am Anzeigegerät (66) und/oder am gegebenenfalls eine Sperre (6o;6o') betätigenden Ausgang 54; 54') selbsttätig vom Zentralcomputer (3o) berücksichtigt wird.

7.) Verkaufsanlage nach einem oder mehreren der Ansprüche 1 - 6, dadurch gekennzeichnet, daß die Identifikationskarte aus einer nur für einen Einkauf gültigen Zeitkarte (2o) besteht, die dem Kunden am Eingang (16) ausgegeben und vom Löschungsgerät (62, 62') am Ausgang (54;54') wieder abgenommen wird.

8.) Verkaufsanlage nach einem oder mehreren der Ansprüche 1 - 6, dadurch gekennzeichnet, daß die Identifikationskarte aus einer für eine beliebige Anzahl von Einkäufen eines bestimmten vertrauenswürdigen Kunden gültige Dauerkarte (2o') ist, die dem Kunden gehört, von diesem für den Einkauf mitgebracht und am Ausgang (54;54') vom Löschungsgerät (62;62') wieder dem Kunden ausgehändigt (64) wird.

FIG.1

Berkel

0110085

ABC

224

23 20 22 21 *FIG.2*

*FIG.3*
20 24

ABC
CARTE CLIENT
name: *Müller*
9670

21
20'
22' *FIG.4* 25

*FIG.5*

42

34

43

41
20
44

40

| | | | |
|---|---|---|
| ABC | | 52 |
| POIDS | PRIX/KG | PRIX |
| 0,280 kg | 40 | 11,05 |
| 21.06.82 | SALAMI | 192 |
| DATE | | CLIENT |

49 47 44
46
48
51 50 *FIG.6* 22

38

POIDS
0,280 kg
21.06.82
DATE
ABC
PRIX/KG
40
SALAMI
PRIX
11,05
192
CLIENT

44

*FIG.7*

Berkel